# EUROPEAN PATENT SPECIFICATION

(11) **EP 2 065 297 B1**
(45) Date of publication and mention of the grant of the patent: **03.04.2019**
(21) Application number: 08169167.7
(22) Date of filing: 14.11.2008
(51) Int. Cl.: B62M 9/12

(54) **Bicycle rear derailleur**
Hinterradkettenschaltung für ein Fahrrad
Dérailleur arrière de bicyclette

(30) Priority: 27.11.2007 US 945514
(43) Date of publication of application: 03.06.2009
(73) Proprietor: SHIMANO INC., Osaka 590-8577 (JP)
(72) Inventor: Oseto, Shinya, Sakai City, Osaka 590-8577 (JP); Nagasawa, Hajime, Sakai City, Osaka 590-8577 (JP)
(74) Representative: Intès, Didier Gérard André

(56) References cited:
- EP-A1- 1 939 086
- EP-A2- 1 659 057
- FR-A1- 2 520 693
- US-A- 3 181 383
- US-A1- 2005 250 608
- US-B1- 6 350 212

## Description

### BACKGROUND OF THE INVENTION

### Field of the Invention

This invention generally relates to a bicycle rear derailleur. More specifically, the present invention relates to a movable member that forms the P-axle of a bicycle rear derailleur.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle rear derailleur.

A bicycle rear derailleur is used to selectively engage a chain with one of a plurality of sprockets that rotate with the rear wheel of the bicycle. A typical rear derailleur comprises a base member, a movable member supporting a chain guide and a pair of links coupled between the base member and the movable member so that the chain guide moves laterally relative to the base member. The chain guide typically has an inner cage plate, an outer cage plate, an upper pulley rotatably supported between the inner and outer cage plates and a lower pulley rotatably supported between the inner and outer cage plates. The movable member is typically a cast metal member or a bent sheet metal member that is mounted on a P-axle. The chain guide mounted to the P-axle so that the chain guide pivots about a center axis of the P-axle with respect to the movable member. While these types of conventional bicycle rear derailleur work well, it is desirable to make the rear derailleur as lightweight as possible without compromising performance and durability.

In view of the above, it will be apparent to those skilled in the art from this disclosure that there exists a need for an improved rear derailleur that is as lightweight as possible without compromising performance and durability. This invention addresses this need in the art as well as other needs, which will become apparent to those skilled in the art from this disclosure.
US3181383 discloses a bicycle rear derailleur according to the preamble of claim 1.

### SUMMARY OF THE INVENTION

One object of the present invention is to provide a bicycle rear derailleur with a movable member that is lightweight.

In accordance with one aspect of the present invention as defined by claim 1, a bicycle rear derailleur is provided that basically comprises a base member, a linkage assembly, a movable member and a chain guide. The linkage assembly is movably coupled to the base member. The movable member is movably coupled to the linkage assembly. The movable member includes a resin main body, a metallic coupling member fixed to the resin main body and a pivot axle having a first end coupled to the metallic coupling member. The chain guide is pivotally coupled to a second end of the pivot axle of the movable member.

In accordance with another aspect of the present disclosure, a movable member for a bicycle rear derailleur is provided with a resin main body and a metallic coupling member. The resin main body includes a pivot axle receiving bore and a linkage attachment part. The metallic coupling member is fixed with in the pivot axle receiving bore of the resin main body.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of a bicycle showing a rear derailleur in accordance with a first embodiment;
Figure 2 is an enlarged, outboard side elevational view of the rear derailleur illustrated in Figure 1 in accordance with the first embodiment;
Figure 3 is an exploded perspective view of the cage chain of the rear derailleur illustrated in Figures 1 and 2 in accordance with the first embodiment;
Figure 4 is an exploded perspective view of the movable member of the rear derailleur illustrated in Figures 1 to 3 in accordance with the first embodiment;
Figure 5 is an enlarged longitudinal cross sectional view of the movable member of the rear derailleur as seen along section line 5-5 of Figure 2;
Figure 6 is an exploded cross sectional view of the movable member of the rear derailleur illustrated in Figure 5;
Figure 7 is an inside elevational view of the movable member of the rear derailleur illustrated in Figure 2;
Figure 8 is a front side elevational view of the movable member of the rear derailleur illustrated in Figure 7;
Figure 9 is an outside elevational view of the movable member of the rear derailleur illustrated in Figures 7 and 8;
Figure 10 is a rear side elevational view of the movable member of the rear derailleur illustrated in Figures 7 to 9;

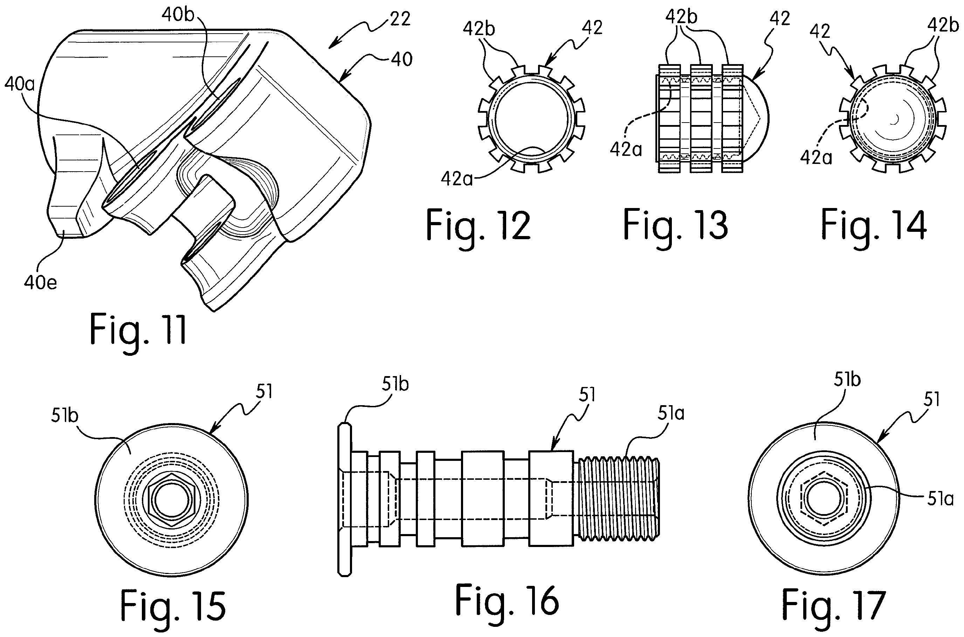

Figure 11 is a perspective view of the movable member of the rear derailleur illustrated in Figures 7 to 10;
Figure 12 is an inside end elevational view of the metallic coupling member or nut of the movable member for the rear derailleur illustrated in Figure 2;
Figure 13 is a side elevational view of the metallic coupling member or nut of the movable member illustrated in Figure 12;
Figure 14 is an outside elevational view of the metallic coupling member or nut of the movable member illustrated in Figures 12 and 13;
Figure 15 is an inside end elevational view of the pivot axle of the movable member for the rear derailleur illustrated in Figure 2;
Figure 16 is a side elevational view of the pivot axle of the movable member illustrated in Figure 15; and
Figure 17 is an outside elevational view of the pivot axle of the movable member illustrated in Figures 15 and 16.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

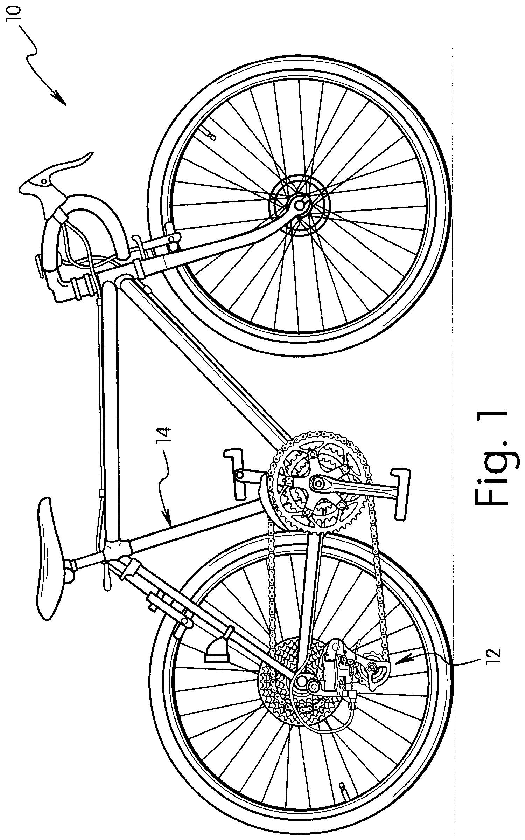

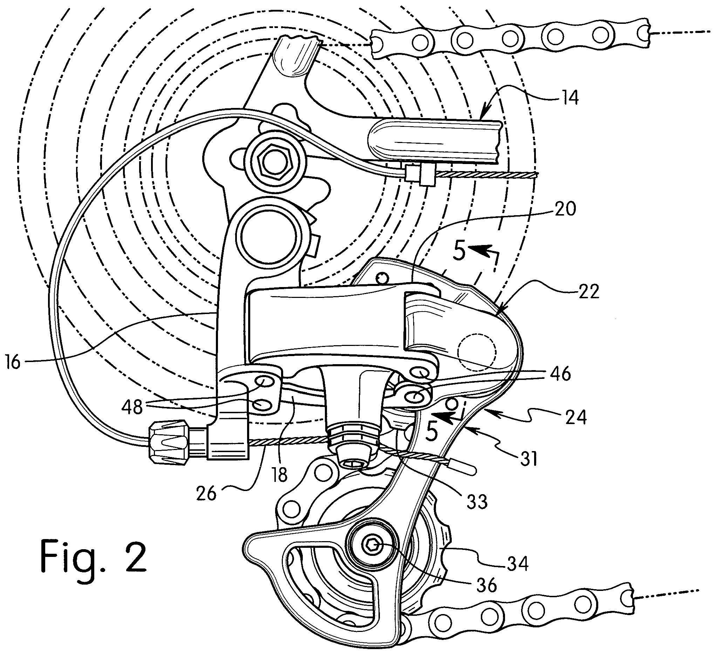

Referring initially to Figure 1, a bicycle 10 is illustrated that is equipped with a bicycle rear derailleur 12 in accordance with a first embodiment of the present invention. As shown in Figures 1 and 2, the bicycle 10 has a bicycle frame 14 in which the rear derailleur 12 is secured thereto. As shown in Figure 2, the rear derailleur 12 basically includes a base member 16, a pair of links 18 and 20, a movable member 22 and a chain guide 24. The base member 16 of the rear derailleur 12 is fixedly secured to a rear mounting portion of the bicycle frame 14 of the bicycle 10 such that the movable member 22 and the chain guide 24 can move relative to the bicycle frame 14 via the links 18 and 20. The links 18 and 20 form a linkage assembly that is movably coupled between the base member 16 and the movable member 22 such that the movable member 22 can move inwardly and outwardly relative to the bicycle frame 14 when the base member 16 is fixed to the bicycle frame 14. The chain guide 24 is pivotally mounted to the movable member 22 and operatively engages a chain to shift the chain between rear sprockets or gears.

Basically, the rear derailleur 12 is a conventional rear derailleur in which an inner wire 26 of a Bowden cable assembly is coupled to one of the links 18 and 20 (e.g., the inner wire coupled to the link 20 in the illustrated embodiment) to move the movable member 22 and the chain guide 24 laterally relative to the base member 16. A coil spring (not shown) is connected to diagonally opposite pivot shafts so that links 18 and 20 are biased together. Generally speaking, the present invention can be used with any rear derailleur that uses a movable member with a chain guide. Thus, the parts of the rear derailleur 12 will not be discussed or illustrated in detail herein, except for those parts that relate to the movable member 22 and the chain guide 24.

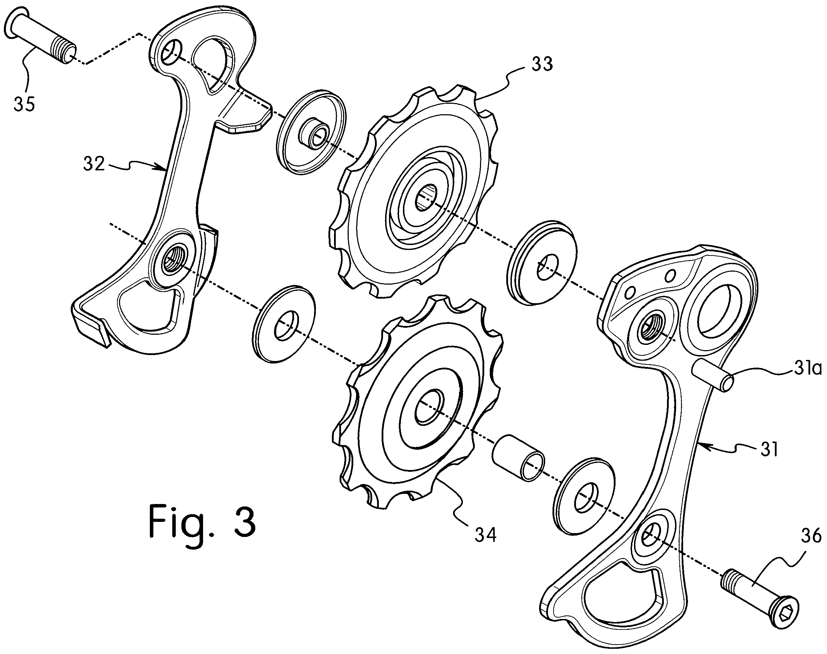

First, as best seen in Figure 3, the chain guide 24 will now be discussed in more detail. Basically, the chain guide 24 has an outer cage plate 31, an inner cage plate 32, an upper or guide pulley 33 and a lower or tension pulley 34. The upper pulley 33 is rotatably supported between the outer and inner cage plates 31 and 32 by an upper axle or pulley bolt 35. The lower pulley 34 is rotatably supported between the outer and inner cage plates 31 and 32 by a lower axle or pulley bolt 36. As mentioned above, the chain guide 24 is pivotally mounted to the movable member 22. The outer cage plate 31 has a plate stop pin 31a that contacts the movable member 22 to hold the outer cage plate 31 at a predetermined position with respect to the movable member 22 when the chain is disengaged from the pulleys 33 and 34.

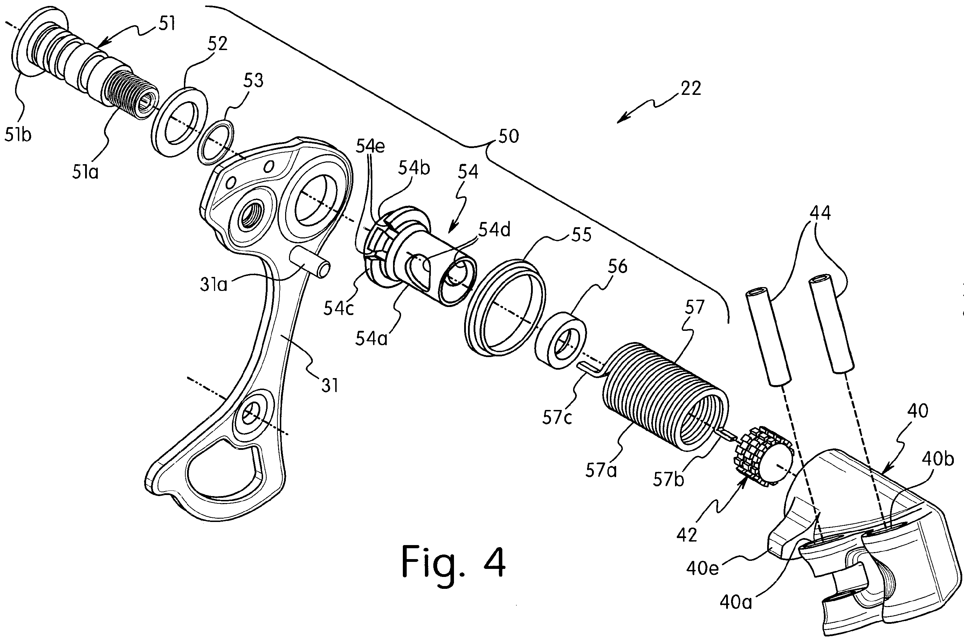

As best seen in Figure 4, the movable member 22 basically includes a resin (non-metallic) main body 40 and a metallic coupling member or nut 42 fixed to the resin main body 40. Preferably, the metallic coupling member 42 is embedded in the resin main body 40. For example, the resin main body 40 is a one-piece, unitary member that is injection molded around the periphery of the metallic coupling member 42. Of course, the metallic coupling member 42 can be fixed to the resin main body 40 by other suitable fixing methods such as adhesive or the like. In the illustrated embodiment, the resin main body 40 is made of a composite plastic material such as nylon with carbon fibers for reducing weight. In other words, in the illustrated embodiment, the resin main body 40 includes a carbon fiber reinforced plastic. In the illustrated embodiment, the metallic coupling member 42 is preferably constructed of a lightweight metallic material such as aluminum or other any other suitable metallic material.

The resin main body 40 includes a linkage attachment part having a first pivot hole 40a and a second pivot hole 40b. The first and second pivot holes 40a and 40b are each provided with a metal reinforcement sleeve 44 (Figure 4). Preferably, the metal reinforcements or sleeves 44 are press-fitted into the first and second pivot holes 40a and 40b of the resin main body 40. The metal reinforcements 44 receive metal pivot pins 46 (Figure 2) to pivotally attach the links 18 and 20 to the resin main body 40. The ends of the metal pivot pins 46 are crimped to attach the links 18 and 20 to the resin main body 40 as shown. Alternatively, only one end of each of the metal pivot pins 46 is crimped to attach the links 18 and 20 to the resin main body 40. The other ends of the links 18 and 20 are pivotally attached to the base member 16 by a pair of metal pivot pins 48 (Figure 2).

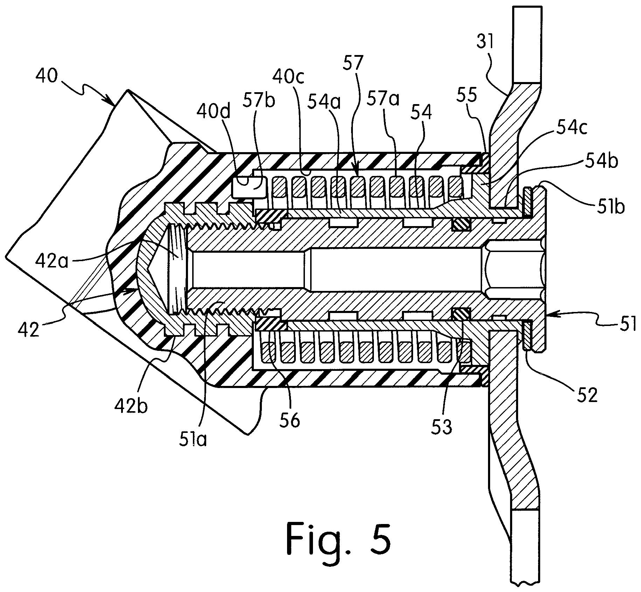

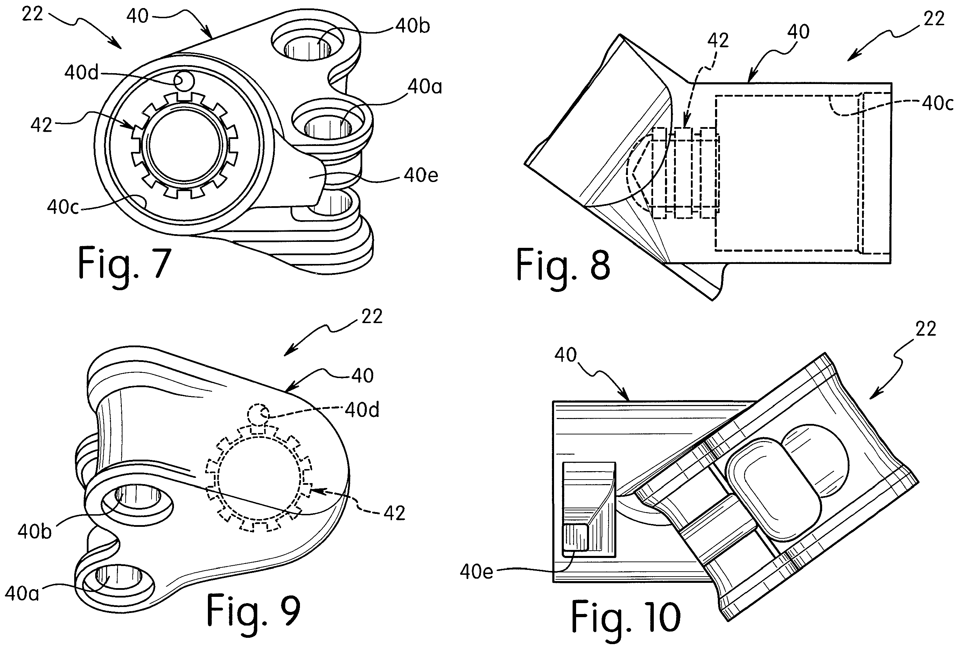

As seen in Figures 5 to 8, the resin main body 40 also includes a pivot axle receiving bore 40c. The pivot axle receiving bore 40c is a blind bore with the metallic coupling member 42 embedded at the inner end of the pivot axle receiving bore 40c. The inner end of the pivot axle receiving bore 40c also has a spring receiving hole 40d that will be discussed later. The outside surface of the resin main body 40 also has a protrusion or stop 40e that projects outwardly for limiting movement of the chain guide 24 in a clockwise direction as viewed from the exterior side of the rear derailleur 12. In particular, the plate stop pin 31a of the outer cage plate 31 contacts the stop 40e of the movable member 22 to limit movement of the outer cage plate 31 with respect to the movable member 22 when the chain is disengaged from the pulleys 33 and 34.

The metallic coupling member 42 includes an interior threaded bore 42a and an outer surface with a plurality of projections 42b. The projections 42b are preferably completely embedded within the resin main body 40. The metallic coupling member 42 is completely disposed within the pivot axle receiving bore 40c of the resin main body 40, with the metallic coupling member 42 being at least partially embedded within the resin main body 40. In particular, the projections 42b extend radially outwardly from the metallic coupling member 42 with the projections 42b being completely embedded within the resin main body 40. In the illustrated embodiment, the metallic coupling member 42 has three circumferentially extending rows formed by a plurality of the projections 42b in each row. The projections 42b ensure a secure bond between the resin main body 40 and the metallic coupling member 42.

Still referring to Figures 4 to 6, the movable member 22 further includes a P-axle assembly 50 for pivotally mounting the chain guide 24 to the main body 40. The P-axle assembly 50 includes a pivot axle 51, a pivot axle washer 52, an O-ring 53, a pivot axle sleeve 54, a pivot ring 55, a spacer 56 and a P-axle tension (torsion) spring 57. The P-axle assembly 50 is installed in the pivot axle receiving bore 40c of the resin main body 40 with the pivot axle 51 being fixedly attached to the resin main body 40 by the metallic coupling member or nut 42. In particular, the pivot axle 51 is threadedly coupled to the metallic coupling member 42 with the outer cage plate 31 pivotally mounted about the pivot axle 51 by the pivot axle sleeve 54. The P-axle tension spring 57 is operatively coupled between the resin main body 40 and the pivot axle sleeve 54 so that the outer cage plate 31 is biased in a clockwise direction as viewed from the exterior side of the rear derailleur 12. Thus, when the rear derailleur 12 is assembled, the pivot axle 51 is threadedly engaged with the threaded bore 42a of the metallic coupling member 42 to pivotally couple the outer cage plate 31 to the resin main body 40 via the P-axle assembly 50.

As best seen in Figures 4 to 6, the pivot axle 51 is a metal member that is fixedly coupled to the metallic coupling member 42 and pivotally supports the outer cage plate 31 on the movable member 22. The pivot axle 51 has a shaft with a first threaded end 51a and a second headed end 51b. The first threaded end 51a is threadedly coupled to the metallic coupling member 42. The second headed end 51b retains the outer cage plate 31 to the movable member 22 in a pivotal manner. Thus, the chain guide 24 is pivotally coupled to one end of the pivot axle 51 of the movable member 22 via the pivot axle sleeve 54 for limited movement as viewed from the exterior side of the rear derailleur 12. If the metallic coupling member 42 is not used to threadedly couple the pivot axle 51 to the movable member, than it would be difficult to get a reliable female thread formed directly on the plastic movable member 22. Therefore, the metallic coupling member 42 having the interior threaded bore 42a (i.e., an inner thread) is inserted in the plastic material of the resin main body 40.

As best seen in Figure 5, the pivot axle washer 52 is disposed on the shaft of the pivot axle 51 between the second headed end 51b of the pivot axle 51 and the pivot axle sleeve 54. The pivot axle washer 52 is a conventional metal P-axle washer, and thus, the pivot axle washer 52 will not be discussed and/or illustrated in detail herein.

Still referring to Figure 5, the O-ring 53 is disposed in a recess on the shaft of the pivot axle 51. The O-ring 53 is a sealing member that is formed of a suitable sealing material such as an elastomeric material. The O-ring 53 contacts an interior surface of the pivot axle sleeve 54 to form a seal between the shaft of the pivot axle 51 and the pivot axle sleeve 54. The O-ring 53 is a conventional sealing member, and thus, the O-ring 53 will not be discussed and/or illustrated in detail herein.

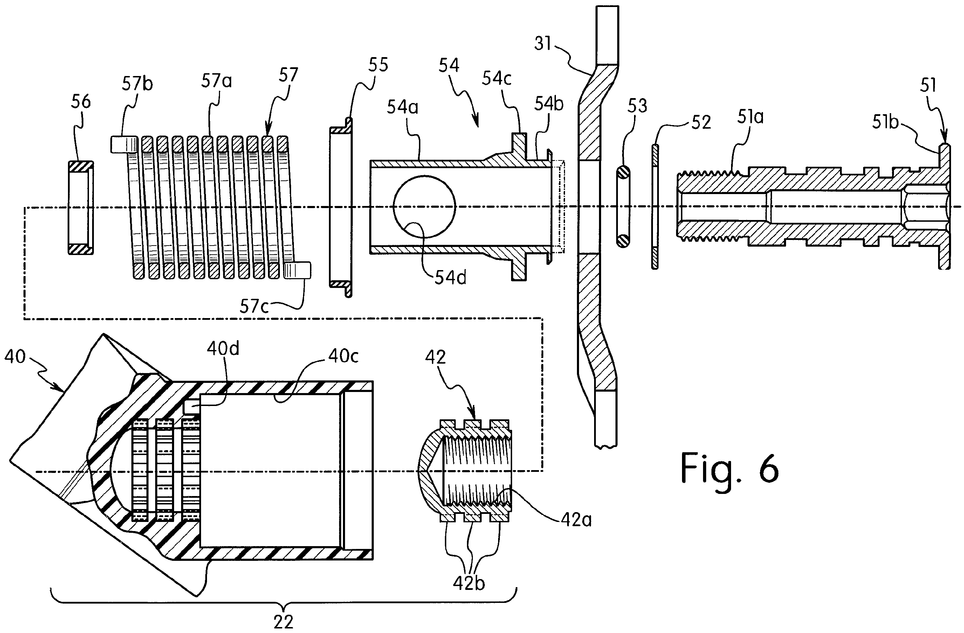

As best seen in Figure 4 and 6, the pivot axle sleeve 54 is a tubular member having a tubular support portion 54a, a tubular fastening portion 54b and a flange portion 54c. The tubular support portion 54a has a pair of openings 54d for holding grease or lubricant, and for reducing the weight of the tubular support portion 54a.

As best seen in Figure 5, the tubular support portion 54a of the pivot axle sleeve 54 is rotatably supported on the shaft of the pivot axle 51, while the tubular fastening portion 54b is crimped onto the outer cage plate 31 to fix the pivot axle sleeve 54 to the outer cage plate 31. Thus, the pivot axle sleeve 54 rotatably supports the outer cage plate 31 on the shaft of the pivot axle 51. In particular, the flange portion 54c abuts one side of the outer cage plate 31, while the tubular fastening portion 54b is deformed to form an annular abutment flange that contacts the other side of the outer cage plate 31 so that the outer cage plate 31 is sandwiched therebetween. While the pivot axle sleeve 54 is fixed to the outer plate 31 by crimping, it will be apparent from this diclosure that other fastening arrangements can be utilized as needed and/or desired. In any event, the outer plate 31 and the pivot axle sleeve 54 rotate together as a unit on the pivot axle 51.

As best seen in Figure 4, the flange portion 54c includes a pair of openings or notches 54e that selectively engages one end of the P-axle tension spring 57. In particular, the P-axle tension spring 57 has a coiled portion 57a disposed on the shaft of the pivot axle 51, a first end 57b disposed in the spring receiving hole 40d of the resin main body 40 and a second end 57c disposed in one of the notches 54e of the pivot axle sleeve 54. By selected which of the notches 54e receives the second end 57c of the P-axle tension spring 57, the spring force applied to the outer cage plate 31 can be adjusted. Thus, when the pivot axle 51 is threadedly coupled to the metallic coupling member 42, the outer cage plate 31 is pivotally mounted about the pivot axle 51 by the pivot axle sleeve 54. The P-axle tension spring 57 is operatively coupled between the resin main body 40 and the pivot axle sleeve 54 so that the outer cage plate 31 is biased in a clockwise direction as viewed from the exterior side of the rear derailleur 12.

As best seen in Figure 5, the pivot ring 55 is a metal ring that is partially disposed in the open end of the pivot axle receiving bore 40c of the resin main body 40. The pivot ring 55 acts as an interface or bushing between the outer cage plate 31 and the resin main body 40 so that the outer cage plate 31 can pivot on the pivot axle 51 with respect to the resin main body 40. The pivot ring 55 is a conventional sealing member, and thus, the pivot ring 55 will not be discussed and/or illustrated in detail herein.

As best seen in Figure 4 to 6, the spacer 56 is a rigid annular member that is disposed on the pivot axle 51 within the pivot axle receiving bore 40c of the resin main body 40 between the pivot axle sleeve 54 and the metallic coupling member 42. The spacer 56 is dimensioned so that an appropriate amount of play exists to allow the pivot axle sleeve 54 to rotate on the pivot axle 51. In other words, the spacer 56 is dimensioned so that tightening force of the pivot axle 51 is not transmitted to the pivot axle sleeve 54. Thus, when the rear derailleur 12 is assembled, the pivot axle 51 is threadedly engaged with the threaded bore 42a of the metallic coupling member 42 to couple the P-axle assembly 50 to the resin main body 40. The spacer 56 abuts a flange of the pivot axle 51 and an end of the metallic coupling member 42 so that a very small gap exists between the spacer 56 and the pivot axle sleeve 54.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the rear derailleur 12. Accordingly, these terms, as utilized to describe the present invention should be interpreted relative to a bicycle equipped with the rear derailleur 12 as used in the normal riding position. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle rear derailleur (12) comprising:
a base member (16);
a linkage assembly movably coupled to the base member (16);
a movable member (22) movably coupled to the linkage assembly, the movable member (22) including a resin main body (40), a metallic coupling member (42) fixed to the resin main body (40) and a pivot axle (51) having a first end (51a) coupled to the metallic coupling member (42); and
a chain guide (24) pivotally coupled to a second end (51b) of the pivot axle (51) of the movable member (22);
**characterized in that** the metallic coupling member (42) includes a plurality of projections (42b) embedded within the resin main body (40).

2. The bicycle rear derailleur (12) as set forth in claim 1, wherein
the metallic coupling member (42) includes a threaded bore (42a) with the pivot axle (51) threadedly engaged with the threaded bore (42a) of the metallic coupling member (42).

3. The bicycle rear derailleur (12) as set forth in claim 1 or 2, wherein
the metallic coupling member (42) is completely disposed within a pivot axle receiving bore (40c) of the resin main body (40), with the metallic coupling member (42) being at least partially embedded within the resin main body (40).

4. The bicycle rear derailleur (12) as set forth in any one of claims 1 to 3, wherein
the resin main body (40) includes a carbon fiber reinforced plastic.

5. The bicycle rear derailleur (12) as set forth in any one of claims 1 to 4, wherein
the resin main body (40) includes at least one first pivot hole (40a) with a first metal reinforcement (44) and at least one second pivot hole (40b) with a second metal reinforcement (44); and
the linkage assembly includes a first link (18) pivotally attached to the resin main body (40) via a first pivot pin (46) disposed in the first pivot hole (40a) of the resin main body (40), and includes a second link (20) pivotally attached to the resin main body (40) via a second pivot pin (46) disposed in the second pivot hole (40b) of the resin main body (40).

6. The bicycle rear derailleur (12) as set forth in any one of claims 1 to 5, wherein
the pivot axle (51) is a metal member.

## Patentansprüche

1. Fahrradschaltwerk (12) umfassend:
ein Basiselement (16),
eine Verbindungsbaugruppe, die beweglich an das Basiselement (16) gekoppelt ist,
ein bewegliches Element (22), das beweglich an die Verbindungsbaugruppe gekoppelt ist, wobei das bewegliche Element (22) einen Harzhauptkörper (40), ein metallisches Kopplungselement (42), das an dem Harzhauptkörper (40) befestigt ist, und eine Schwenkachse (51), die ein erstes Ende (51a) aufweist, das an das metallischen Kopplungselement (42) gekoppelt ist, beinhaltet, und
eine Kettenführung (24), die schwenkbar an ein zweites Ende (51b) der Schwenkachse (51) des beweglichen Elements (22) gekoppelt ist,
**dadurch gekennzeichnet, dass** das metallische Kopplungselement (42) mehrere Vorsprünge (42b) beinhaltet, die in den Harzhauptkörper (40) eingebettet sind.

2. Fahrradschaltwerk (12) nach Anspruch 1, wobei
das metallische Kopplungselement (42) eine Gewindebohrung (42a) beinhaltet, wobei die Schwenkachse (51) in Gewindeeingriff mit der Gewindebohrung (42a) des metallischen Kopplungselements (42) steht.

3. Fahrradschaltwerk (12) nach Anspruch 1 oder 2, wobei
das metallische Kopplungselement (42) vollständig innerhalb einer Schwenkachsenaufnahmebohrung (40c) des Harzhauptkörpers (40) angeordnet ist, wobei das metallische Kopplungselement (42) mindestens teilweise in den Harzhauptkörper (40) eingebettet ist.

4. Fahrradschaltwerk (12) nach einem der Ansprüche 1 bis 3, wobei
der Harzhauptkörper (40) einen kohlefaserverstärkten Kunststoff beinhaltet.

5. Fahrradschaltwerk (12) nach einem der Ansprüche 1 bis 4, wobei
der Harzhauptkörper (40) mindestens ein erstes Schwenkloch (40a) mit einer ersten Metallverstärkung (44) und mindestens ein zweites Schwenkloch (40b) mit einer zweiten Metallverstärkung (44) beinhaltet, und
die Verbindungsbaugruppe eine erste Verbindung (18) beinhaltet, die schwenkbar an dem Harzhauptkörper (40) über einen ersten Schwenkbolzen (46), der in dem ersten Schwenkloch (40a) des Harzhauptkörpers (40) angeordnet ist, befestigt ist, und eine zweite Verbindung (20) beinhaltet, die schwenkbar an dem Harzhauptkörper (40) über einen zweiten Schwenkbolzen (46), der in dem zweiten Schwenkloch (40b) des Harzhauptkörpers (40) angeordnet ist, befestigt ist.

6. Fahrradschaltwerk (12) nach einem der Ansprüche 1 bis 5, wobei
die Schwenkachse (51) ein Metallelement ist.

## Revendications

1. Dérailleur arrière de bicyclette (12) comprenant :
un élément de base (16) ;
un ensemble de liaison couplé de manière mobile à l'élément de base (16) ;
un élément mobile (22) couplé de manière mobile à l'ensemble de liaison, l'élément mobile (22) comprenant un corps principal en résine (40), un élément de couplage métallique (42) fixé au corps principal en résine (40) et un axe de pivot (51) ayant une première extrémité (51a) couplée à l'élément de couplage métallique (42) ; et
un guide de chaîne (24) couplé de manière pivotante à une seconde extrémité (51b) de l'axe de pivot (51) de l'élément mobile (22) ;
**caractérisé en ce que** l'élément de couplage métallique (42) comprend une pluralité de saillies (42b) encastrées à l'intérieur du corps principal en résine (40).

2. Dérailleur arrière de bicyclette (12) selon la revendication 1, dans lequel :
l'élément de couplage métallique (42) comprend un alésage fileté (42a) avec l'axe de pivot (51) mis en prise par filetage avec l'alésage fileté (42a) de l'élément de couplage métallique (42).

3. Dérailleur arrière de bicyclette (12) selon la revendication 1 ou 2, dans lequel :
l'élément de couplage métallique (42) est complètement disposé à l'intérieur d'un alésage de réception d'axe de pivot (40c) du corps principal en résine (40), avec l'élément de couplage métallique (42) étant au moins partiellement encastré à l'intérieur du corps principal en résine (40).

4. Dérailleur arrière de bicyclette (12) selon l'une quelconque des revendications 1 à 3, dans lequel :
le corps principal en résine (40) comprend un plastique renforcé en fibres de carbone.

5. Dérailleur arrière de bicyclette (12) selon l'une quelconque des revendications 1 à 4, dans lequel :
le corps principal en résine (40) comprend au moins un premier trou de pivot (40a) avec un premier renfort métallique (44) et au moins un second trou de pivot (40b) avec un second renfort métallique (44) ; et
l'ensemble de liaison comprend une première liaison (18) fixée de manière pivotante au corps principal en résine (40) via une première broche de pivot (46) disposée dans le premier trou de pivot (40a) du corps principal en résine (40) et comprend une seconde liaison (20) fixée de manière pivotante sur le corps principal en résine (40) via une seconde broche de pivot (46) disposée dans le second trou de pivot (40b) du corps principal en résine (40).

6. Dérailleur arrière de bicyclette (12) selon l'une quelconque des revendications 1 à 5, dans lequel :
l'axe de pivot (51) est un élément métallique.
